# EUROPEAN PATENT APPLICATION

(11) **EP 2 055 916 A2**
(43) Date of publication of application: **06.05.2009**
(21) Application number: 08167736.1
(22) Date of filing: 28.10.2008
(51) Int. Cl.: F02D 41/04, F02N 11/10, F02D 41/22

(54) **Vehicle and control method therefor**

(30) Priority: 29.10.2007 JP 2007280357
(71) Applicant: Toyota Jidosha Kabushiki Kaisha, Toyota-shi, Aichi-ken, 471-8571 (JP)
(72) Inventor: Moriya, Kouki, Toyota-shi Aichi 471-8571 (JP); Mizutani, Koichi, Toyota-shi Aichi 471-8571 (JP); Yoshiyama, Takuya, Toyota-shi Aichi 471-8571 (JP)
(74) Representative: TBK-Patent

(57) **Abstract**

The abnormality diagnosis of a starter motor is started at a time (t1) at which a stop of the vehicle is predicted. At a time (t3) at which an automatic stop condition, including a condition that the abnormality diagnosis is completed and that it is determined that the starter motor is normal, is satisfied, the engine is automatically stopped (see solid lines). Therefore, the engine can be automatically stopped at earlier timing than in a construction in which the abnormality diagnosis of the starter motor is started at a time (t2) at which the vehicle stops, and at a time (t4) at which the abnormality diagnosis is completed, the engine is automatically stopped (see dashed one-dotted lines). As a result, the fuel economy can be improved.

## Description

### BACKGROUND OF THE INVENTION

### 1.Field of Invention

The invention relates to a vehicle, and a control method for the vehicle.

### 2.Description of Related Art

A vehicle has been proposed which carries out an idling stop operation in which when a predetermined condition for stopping an engine is satisfied, it is determined whether or not a starter relay electrification circuit of a starter motor for cranking the engine is normal, and if it is determined that the starter relay electrification circuit is normal, the engine is stopped on condition that the vehicle speed is 0 and the engine is being idled (e.g., see Japanese Patent Application Publication No. 2006-322332 (JP-A-2006-322332)). In this vehicle, when the brake is on and the shift lever is at the parking or neutral position, it is considered that the predetermined engine stop condition is satisfied, so that it is determined whether the starter relay electrification circuit is normal or abnormal. Therefore, whether the starter relay electrification circuit is normal or abnormal can be determined more quickly than in the case where the engine stop condition includes the condition that the vehicle speed is 0, or the condition that the engine is being idled, according to the JP-A-2006-322332.

In conjunction with such vehicles, it is considered to be one of the important issues to improve the fuel economy by starting the idling stop at earlier timing. In the foregoing vehicle, if the predetermined engine stop condition, including the condition that the shift lever is at the parking or neutral position, is satisfied, it is determined whether or not the starter motor relay electrification circuit is normal or abnormal, before performing an idling stop. It is desirable to perform this determination at earlier timing.

### SUMMARY OF THE INVENTION

A main purpose of the vehicle and the control method therefor of the invention is to improve fuel economy.

A first aspect of the invention relates to a vehicle that travels using power from an internal combustion engine. A vehicle that travels by using power from an internal combustion engine includes: cranking means for cranking the internal combustion engine; vehicle stop prediction means for predicting a stop of the vehicle based on at least a state of travel of the vehicle; abnormality diagnosis means for performing abnormality diagnosis of the cranking means when a stop of the vehicle is predicted by the vehicle stop prediction means; and automatic stop/start means for automatically stopping the internal combustion engine if a predetermined automatic stop condition, including a condition that it is diagnosed that the cranking means does not have abnormality, is satisfied, and for automatically starting the internal combustion engine in an automatically stopped state with the cranking means performing cranking if a predetermined automatic start condition is satisfied.

In this vehicle, the abnormality diagnosis of the cranking means is performed when a stop of the vehicle is predicted on the basis of at least the state of travel of the vehicle. When a predetermined automatic stop condition, including the condition that it is diagnosed that the cranking means does not have abnormality, is satisfied, the internal combustion engine is automatically stopped. The internal combustion engine having been automatically stopped is automatically started with the cranking means performing cranking if the predetermined automatic start condition is satisfied. Therefore, since the abnormality diagnosis of the cranking means is performed when a stop of the vehicle is predicted, the abnormality diagnosis of the cranking means can be performed at earlier timing. Therefore, the internal combustion engine can be automatically stopped at earlier timing, and the fuel economy can be improved.

The vehicle stop prediction means may predict a stop of the vehicle if a predetermined vehicle stop prediction condition, including a vehicle speed condition that the vehicle speed is less than or equal to a predetermined positive vehicle speed, an accelerator condition that an accelerator operation is not performed, and a brake condition that a brake operation is performed, is satisfied. In this case, the vehicle stop prediction condition may be a condition that is satisfied regardless of the shift position.

Besides, the foregoing vehicle may further include power transmission release means for performing transmission of power from the internal combustion engine to an axle shaft side and release of connection between an output shaft of the internal combustion engine and the axle shaft side, and the vehicle stop prediction means may predict a stop of the vehicle if a predetermined vehicle stop prediction condition, including a vehicle speed condition that the vehicle speed is less than or equal to a predetermined vehicle speed, and an accelerator condition that an accelerator operation is not performed, and a connection release condition that the connection between the output shaft of the internal combustion engine and the axle shaft side is released by the power transmission release means based on a driver's operation, is satisfied. Besides, the power transmission release means may be a manual transmission, and the connection release condition may be a condition that the connection between the output shaft of the internal combustion engine and the axle shaft side is released by the power transmission release means based on the driver's operation of a clutch pedal. Besides, the connection release condition may be a condition that the connection between the output shaft of the internal combustion engine and the axle shaft side is released by the power transmission release means based on a shift operation of shifting a shift position to a neutral position. Furthermore, the vehicle stop prediction condition may be a condition that is satisfied regardless of the shift position.

A second aspect of the invention relates to a control method for a vehicle that includes an internal combustion engine that outputs power for travel of the vehicle, and cranking means for cranking the internal combustion engine. This method includes the step of performing abnormality diagnosis of the cranking means if a stop of the vehicle is predicted based on at least a state of travel of the vehicle; and the step of automatically stopping the internal combustion engine if a predetermined automatic stop condition, including a condition that it is diagnosed that the cranking means does not have abnormality, is satisfied, and automatically starting the internal combustion engine in an automatically stopped state, with cranking by the cranking means being involved, if a predetermined automatic start condition is satisfied.

Therefore, since the abnormality diagnosis of the cranking means is performed when a stop of the vehicle is predicted, the abnormality diagnosis of the cranking means can be performed at earlier timing. Therefore, the internal combustion engine can be automatically stopped at earlier timing, and the fuel economy can be improved.

### BRIEF DESCRIPTION OF THE DRAWINGS

The foregoing and further objects, features and advantages of the invention will become apparent from the following description of exemplary embodiments with reference to the accompanying drawings, wherein like numerals are used to represent like elements and wherein:
FIG. 1 is a construction diagram showing a general construction of a motor vehicle 20 as an embodiment of the invention;
FIG. 2 is a flowchart showing an example of a starter motor abnormality diagnosis routine that is executed by an electronic control unit 40;
FIG. 3 is a flowchart showing an example of an automatic stop/start process routine that is executed by the electronic control unit 40;
FIG. 4 is an illustrative diagram showing an example of a relation among the vehicle speed V, the timing at which the abnormality diagnosis of a starter motor 30 is performed, and the timing at which the automatic stop of an engine 22 is performed; and
FIG. 5 is a construction diagram showing a general construction of a motor vehicle 120 according to a modification of the embodiment.

### DETAILED DESCRIPTION OF EMBODIMENTS

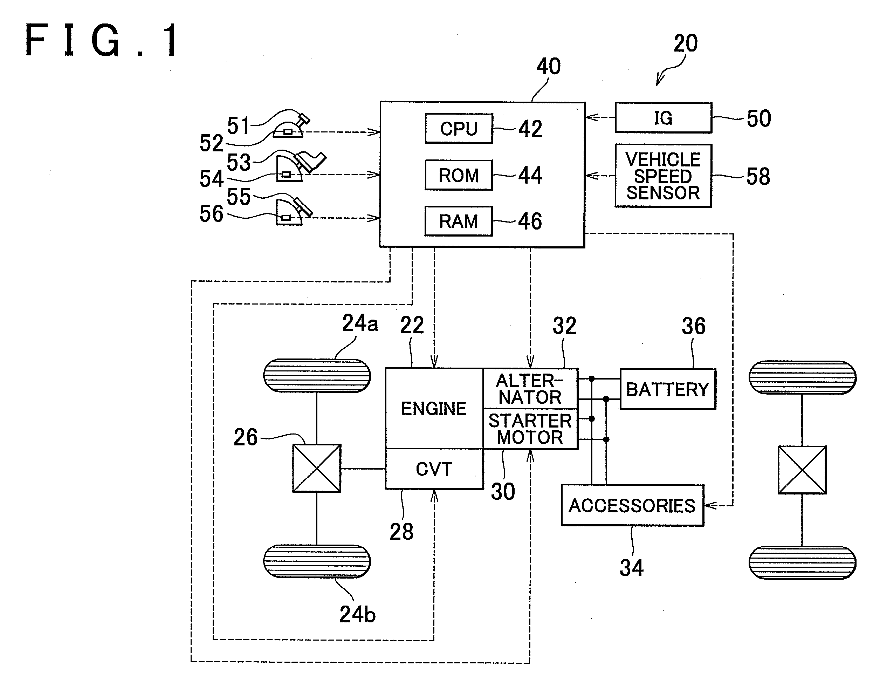

FIG. 1 is a construction diagram showing a general construction of a motor vehicle 20 as embodiment of the invention. A motor vehicle 20 of the embodiment includes: an engine 22; a CVT 28 as a continuously variable transmission that shifts the speed of rotation transmitted from the engine 22 and outputs the power from the engine 22 to axle shafts of driving wheels 24a, 24b via a differential gear 26; a starter motor 30 that cranks the engine 22, an alternator 32 attached to a crankshaft of the engine 22 via a belt (not shown); a battery 36 that is charged by electric power generated by the alternator 32 and supplies electric power to the starter motor 30 and other accessories (e.g., a compressor of an air-conditioner device, or the like); and an electronic control unit 40 that controls the entire vehicle.

The electronic control unit 40 is constructed as a microprocessor having a CPU 42 as a central device. In addition to the CPU 42, the electronic control unit 40 includes a ROM 44 that stores processing programs, a RAM 46 that temporarily stores data, and input/output ports (not shown). Various signals are input to the electronic control unit 40 via the input ports, including an ignition signal from an ignition switch 50, a shift position SP from a shift position sensor 52 that detects the operation position of a shift lever 51, an accelerator operation amount Acc from an accelerator pedal position sensor 54 that detects the amount of operation of an accelerator pedal 53, a brake pedal position BP from a brake pedal position sensor 56 that detects the amount of depression of a brake pedal 55, a vehicle speed V from a vehicle speed sensor 58, etc. Besides, the electronic control unit 40 outputs various signals, including a control signal to the engine 22, a control signal to the CVT 28, a control signal to the starter motor 30, a control signal to the alternator 32, etc. Incidentally, the operation positions of the shift lever 51, that is, shift positions SP thereof, include the parking position (P position), the neutral position (N position), the drive position (D position), the reverse position (R position), etc.

The motor vehicle 20 of this embodiment constructed as described above carries out a so-called idling stop control in which if during stop of the vehicle an automatic stop condition is satisfied, the operation of the engine 22 is automatically stopped, and if during the automatic stop of the engine 22 an automatic start condition is satisfied, the engine 22 is automatically started. The automatic stop condition and the automatic start condition will be described later.

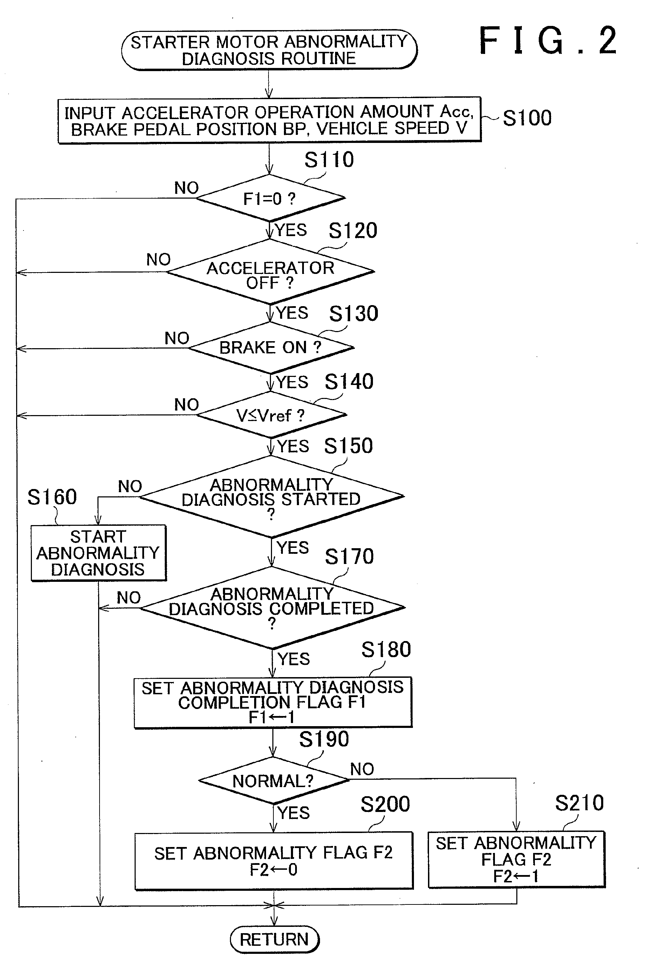

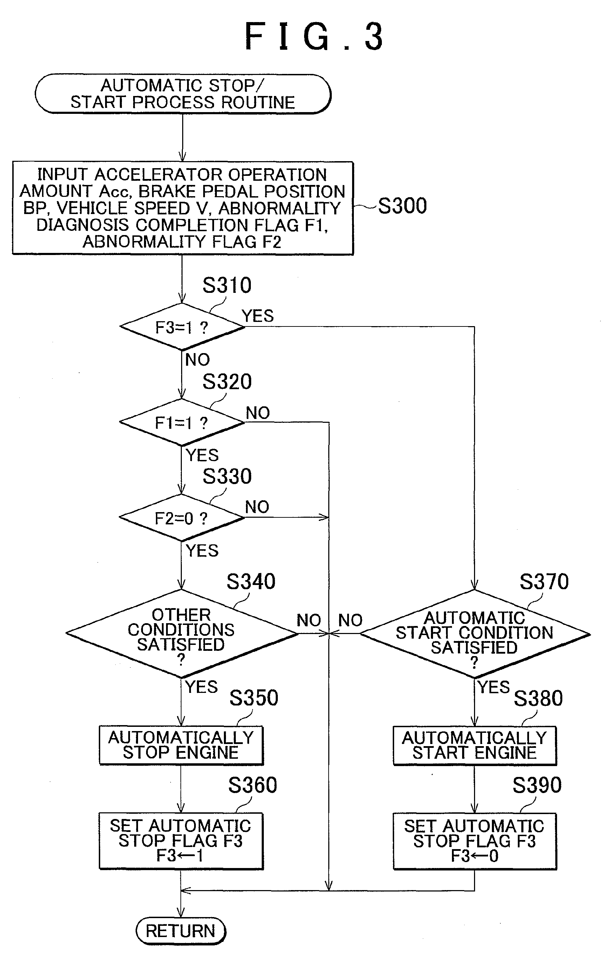

Next, operations of the motor vehicle 20 of the embodiment constructed as described above and, in particular, an operation thereof performed when the motor vehicle 20 comes to a stop from a state in which the motor vehicle 20 is moving and the idling stop control is carried out, will be described. FIG. 2 is a flowchart showing an example of a starter motor abnormality diagnosis routine that is repeatedly executed by the electronic control unit 40 at every predetermined time. FIG. 3 is a flowchart showing an example of an automatic stop/start process routine that is repeatedly executed by the electronic control unit 40 at every predetermined time. Hereinafter, the starter motor abnormality diagnosis routine of FIG. 2 will first be described, and then the automatic stop/start process routine of FIG. 3 will be described.

When the starter motor abnormality diagnosis routine is executed, the CPU 42 of the electronic control unit 40 firstly inputs data regarding, for example, the accelerator operation amount Acc from the accelerator pedal position sensor 54, the brake pedal position BP from the brake pedal position sensor 56, the vehicle speed V from the vehicle speed sensor 58, etc. (step S 100). Then, the CPU 42 checks the value of an abnormality diagnosis completion flag F1 that shows whether or not the abnormality diagnosis of the starter motor 30 has been completed (step S110). The abnormality diagnosis completion flag F1 herein is a flag that is set to 0 as an initial value, and that is set to 1 when the abnormality diagnosis of the starter motor 30 is completed, and that is set to 0 if after the flag that is set to 1, a predetermined condition (e.g., at least one of the condition that the engine 22 has been automatically stopped, the condition that the vehicle speed V is greater than a first predetermined vehicle speed Vref1 (that is equal to a second predetermined vehicle speed Vref described below, or is slightly higher than the second predetermined vehicle speed Vref), the condition that a predetermined time has elapsed after the abnormality diagnosis completion flag F1 is set to 1, etc.)

If the value of the abnormality diagnosis completion flag F1 is 1, the starter motor abnormality diagnosis routine is immediately ended. On the other hand, if the value of the abnormality diagnosis completion flag F1 is 0, it is determined whether or not a vehicle stop prediction condition for predicting a stop of the vehicle is satisfied on the basis of the accelerator operation amount Acc, the brake pedal position BP, and the vehicle speed V (step S120 to S140). The satisfaction of the vehicle stop prediction condition is determined in this embodiment when the value of the accelerator operation amount Acc is 0, that is, the accelerator is off (step S120), and the value of the brake pedal position BP is greater than 0, that is, the brake is on (step S130), and the vehicle speed V is less than or equal to the second predetermined vehicle speed Vref (e.g., 6 km/h or 8 km/h) (step S140). If it is determined that the vehicle stop prediction condition has not been satisfied, this routine is immediately ended.

On the other hand, if it is determined that the vehicle stop prediction condition has been satisfied, it is then determined whether or not the abnormality diagnosis of the starter motor 30 has already started (step S150). If the abnormality diagnosis has not started, the start of the abnormality diagnosis of the starter motor 30 is commanded (step S160). Then, this routine is ended. When the start of the abnormality diagnosis of the starter motor 30 is commanded, the electronic control unit 40 starts the abnormality diagnosis of the starter motor 30 in parallel with this routine. Thus, in this embodiment, when the vehicle stop prediction condition has been satisfied, the abnormality diagnosis of the starter motor 30 is performed. Therefore, the abnormality diagnosis of the starter motor 30 can be performed at earlier timing than in the case where the abnormality diagnosis of the starter motor 30 is performed after the vehicle stops. Furthermore, in the embodiment, the vehicle stop prediction condition is satisfied regardless of the shift position SP, that is, the vehicle stop prediction condition is satisfied even if the shift position SP is not the N position. Therefore, it is considered that the abnormality diagnosis of the starter motor 30 can be performed at earlier timing than in the case where the vehicle stop prediction condition is satisfied when the shift position SP is the N position.

If in step S150 it is determined that the abnormality diagnosis of the starter motor 30 has already started, it is then determined whether or not the abnormality diagnosis has been completed (step S170). If it is determined that the abnormality diagnosis has not been completed, this routine is immediately ended. On the other hand, if in step S 170 it is determined that the abnormality diagnosis has been completed, the abnormality diagnosis completion flag F1 is set to 1 (step S180), and the result of the abnormality diagnosis is checked (step S 190). If it turns out that the starter motor 30 is normal, an abnormality flag F2 is set to 0 (step S200). If the starter motor 30 has abnormality, the abnormality flag F2 is set to 1 (step S210). After that, this routine is ended.

Next, an operation at the time of carrying out the idling stop will be described. When the automatic stop/start process routine of FIG. 3 is executed, the CPU 42 of the electronic control unit 40 inputs data regarding the accelerator operation amount Acc from the accelerator pedal position sensor 54, the brake pedal position BP from the brake pedal position sensor 56, the vehicle speed V from the vehicle speed sensor 58, the abnormality diagnosis completion flag F1, the abnormality flag F2, etc. (step S300), and checks the value of an automatic stop flag F3 that is set to 1 when the engine 22 is in the automatically stopped state and that is set to 0 when the engine 22 is not in the automatically stopped state (step S310).

Then, if the value of the automatic stop flag F3 is 0, that is, if the engine 22 has not been automatically stopped, it is determined whether or not the automatic stop condition for automatically stopping the engine 22 has been satisfied (steps S320 to S340). Herein, the satisfaction of the automatic stop condition is determined in this embodiment when the following conditions are all satisfied: a condition that the value of the abnormality diagnosis completion flag F1 is 1, that is, the abnormality diagnosis of the starter motor 30 has been completed (step S320); a condition that the value of the abnormality flag F2 is 0, that is, the starter motor 30 is normal (step S330); and other conditions based on the accelerator operation amount Acc, the brake pedal position BP, the vehicle speed V, etc. (step S340). Examples of the other conditions herein include a condition that the accelerator operation amount Acc is 0, that is, the accelerator is off, a condition that the brake pedal position BP is not 0, that is, the brake is on, a condition that the vehicle speed V is 0, that is, the vehicle is at a stop, a condition that the engine 22 is being idled, etc.

If it is determined that the automatic stop condition has not been satisfied, this routine is immediately ended. If it is determined that the automatic stop condition has been satisfied, the engine 22 is automatically stopped (step S350), and the automatic stop flag F3 is set to 1 (step S360), and then this routine is ended. Incidentally, if the value of the abnormality flag F2 is 1, that is, if the starter motor 30 has abnormality, the automatic stop condition is not satisfied, so that the engine 22 is not automatically stopped.

If in step S310 the value of the automatic stop flag F3 is 1, that is, the engine 22 has been automatically stopped, it is then determined whether or not an automatic start condition for automatically starting the engine 22 has been satisfied (step S370). If it is determined that the automatic start condition has not been satisfied, this routine is immediately ended. If it is determined that the automatic start condition has been satisfied, the engine 22 is automatically started by the starter motor 30 performing the cranking (step S380), and the automatic stop flag F3 is set to 0 (step S390), and then this routine is ended. Herein, the satisfaction of the automatic start condition is determined in this embodiment if at least one of the following conditions is satisfied: a condition that the value of the accelerator operation amount Acc is not 0, that is, the accelerator is on; a condition that the value of the brake pedal position BP is 0, that is, the brake is off; etc.

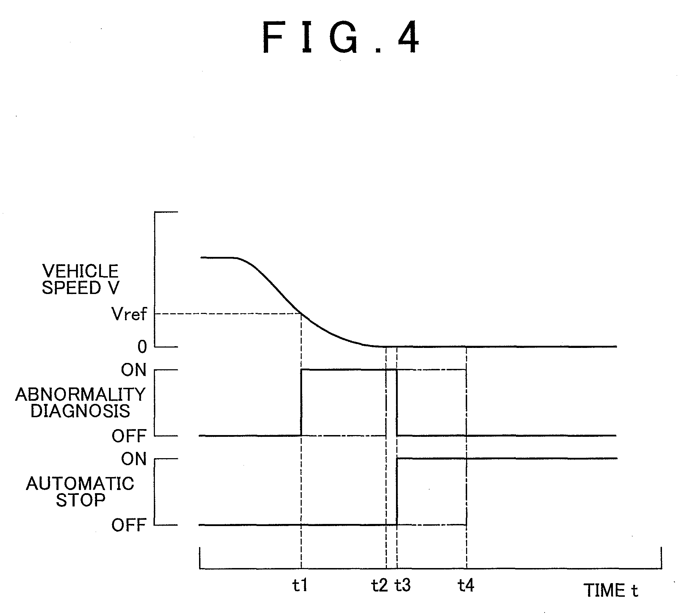

FIG. 4 is an illustrative diagram showing an example of a relation among the vehicle speed V, the timing at which the abnormality diagnosis of the starter motor 30 is performed, and the timing at which the automatic stop of the engine 22 is performed. In the diagram, solid lines show an embodiment in which the abnormality diagnosis of the starter motor 30 is performed when a stop of the vehicle is predicted, and dashed one-dotted lines show a comparative example in which the abnormality diagnosis of the starter motor 30 is performed after the vehicle stops. As shown in the diagram, in the embodiment, the abnormality diagnosis of the starter motor 30 is started at a time t1 at which the vehicle stop prediction condition, including a condition that the vehicle speed V is less than or equal to a threshold value Vref, is satisfied. At a time t3 at which the abnormality diagnosis is completed, the engine 22 is automatically stopped. On the other hand, in the comparative example, the abnormality diagnosis of the starter motor 30 is started at a time t2 at which the vehicle stops after the time t1. At a time t4 at which the abnormality diagnosis is completed, the engine 22 is automatically stopped. Therefore, by starting the abnormality diagnosis of the starter motor 30 at the time t1 at which a stop of the vehicle is predicted as in the embodiment, the timing of automatically stopping the engine 22 can be advanced, so that the fuel economy can be improved.

According to the motor vehicle 20 of the foregoing embodiment, when a stop of the vehicle is predicted, the abnormality diagnosis of the starter motor 30 is performed. Then, when the automatic stop condition, including the condition that it is determined that the starter motor 30 is normal, is satisfied, the engine 22 is automatically stopped. After that, when the automatic start condition is satisfied, the engine 22 having been automatically stopped is automatically started by the cranking performed by the starter motor 30. Therefore, the engine 22 can be automatically stopped at an earlier timing than in a construction in which the abnormality diagnosis of the starter motor 30 is performed after the vehicle stops, and then the engine 22 is automatically stopped after the abnormality diagnosis is completed. As a result, the fuel economy can be improved.

In the motor vehicle 20 of the embodiment, in the determination as to whether or not the vehicle stop prediction condition is satisfied in the starter motor abnormality diagnosis routine shown in FIG. 2, it is determined that the vehicle stop prediction condition is satisfied when the vehicle speed V is less than or equal to the predetermined vehicle speed Vref and the accelerator is off and the brake is on. However, it may also be determined that the vehicle stop prediction condition is satisfied when, in addition to the foregoing conditions, a condition that there is a history of the vehicle speed V exceeding the foregoing first predetermined vehicle speed Vref1 (that is equal to the second predetermined vehicle speed Vref, or is slightly higher than the second predetermined vehicle speed Vref) before the vehicle speed V is less than or equal to the second predetermined vehicle speed Vref or the like is also satisfied.

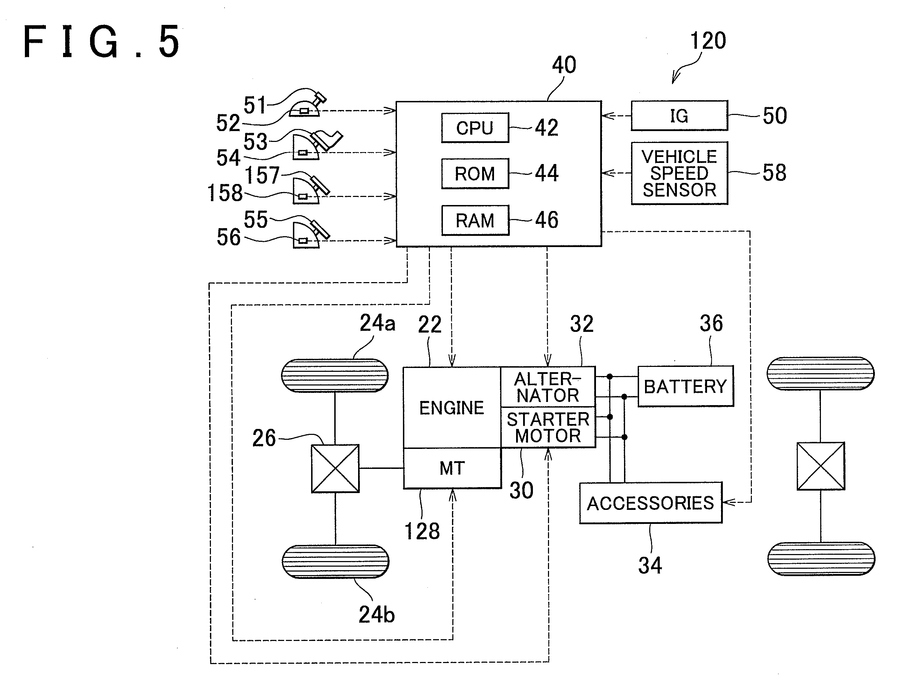

Although the motor vehicle 20 of the embodiment incorporates the CVT 28 as a continuously variable transmission, the CVT 28 may also be replaced by a manual transmission, or an automatic transmission that shifts the speed ratio of the power from the engine 22, involving a shift of the speed change step, and thus outputs power to the driving wheels 24a, 24b when the shift position SP is the D position or the R position, and that releases the connection between the crankshaft of the engine 22 and the driving wheels 24a, 24b when the shift position SP is the P position or the N position. In such a case, in the determination as to whether or not the vehicle stop prediction condition is satisfied in the starter motor abnormality diagnosis routine of FIG. 2, a condition that the shift position SP is the N position may also be used instead of or in addition to the condition that the brake is on. A construction diagram showing a general construction of a motor vehicle 120 incorporating a manual transmission (MT) 128 is shown in FIG. 5. This motor vehicle 120 has substantially the same hardware construction as the motor vehicle 20 of the foregoing embodiment, except that the CVT 28 is replaced by the manual transmission 128, and that a clutch pedal 157 that releases the connection between the crankshaft of the engine 22 and the driving wheels 24a, 24b, and that a clutch switch 158 that outputs an on-signal to the electronic control unit 40 when the clutch pedal 157 is depressed, and outputs an off-signal to the electronic control unit 40 when the clutch pedal is not depressed. Therefore, the same hardware constructions in the motor vehicle 120 as in the motor vehicle 20 of the foregoing embodiment are represented by the same reference characters as those used for the motor vehicle 20 of the foregoing embodiment. In the motor vehicle 120 incorporating the manual transmission 128, in the determination as to whether or not the vehicle stop prediction condition is satisfied, it is permissible to use a condition that clutch pedal 157 is depressed by a driver, that is, a condition that the on-signal is input from the clutch switch 158 to the electronic control unit 40, instead of or in addition to the condition that the brake is on and the condition that the shift position SP is the N position. When the motor vehicle 120 decelerates to stop, the driver usually performs a speed shift operation after depressing the clutch pedal 157. Therefore, in the case where the condition that the clutch pedal 157 is depressed is used instead of the condition that the shift position SP is the N position, the vehicle stop prediction condition is satisfied at earlier timing. Therefore, the abnormality diagnosis of the starter motor 30 and the subsequent automatic stop of the engine 22 can be performed at earlier timings, so that the fuel economy can be further improved. The clutch pedal 157 is automatically operated by an actuator according to the accelerator operation amount, and thus, the engine 22 is automatically stopped/started.

Also, even when the shift lever is at the drive position (for example, the D range or the L range in a vehicle with an automatic transmission, and one of the first to fifth gears in a vehicle with a manual transmission), the abnormality diagnosis of the cranking means may be performed.

In this embodiment, the engine 22 can be regarded as an "internal combustion engine", and the starter motor 30 can be regarded as "cranking means". Furthermore, the electronic control unit 40 executing the process of steps S120 to S140 in the starter motor abnormality diagnosis routine of FIG. 2 in which it is determined whether or not the vehicle stop prediction condition of predicting a stop of the vehicle is satisfied on the basis of the accelerator operation amount Acc, the brake pedal position BP and the vehicle speed V can be regarded as "vehicle stop prediction means". The electronic control unit 40 executing the process of step S 160 in the starter motor abnormality diagnosis routine of FIG. 2 in which the abnormality diagnosis of the starter motor 30 is executed when it is determined that the vehicle stop prediction condition has been satisfied can be regarded as "abnormality diagnosis means". The electronic control unit 40 executing the automatic stop/start process routine of FIG. 3 in which the engine 22 is automatically stopped when the automatic stop condition based on the abnormality diagnosis completion flag F1, the abnormality flag F2, the accelerator operation amount Acc, the brake pedal position BP, the vehicle speed V, etc. is satisfied, and in which the engine 22 is automatically started, with the cranking by the starter motor 30 being involved, when the automatic start condition based on the accelerator operation amount Acc, the brake pedal position BP, etc., is satisfied can be regarded as "automatic stop/start means". Besides, the automatic transmission or the manual transmission 128 can be regarded as "power transmission release means".

The "internal combustion engine" is not limited to internal combustion engines that output power using hydrocarbon-based fuels such as gasoline, light oil or the like, but may be any type of internal combustion engine such as a hydrogen engine or the like. The "cranking means" is not limited to the starter motor 30, but may be any means as long as the means cranks the internal combustion engine. The "vehicle stop prediction means" is not limited to means for determining whether or not the vehicle stop prediction condition for predicting a stop of the vehicle is satisfied on the basis of the accelerator operation amount Acc, the brake pedal position BP or the vehicle speed V, but may be any means as long as the means predicts a stop of the vehicle on the basis of at least the state of travel of the vehicle. The "abnormality diagnosis means" is not limited to the means for performing the abnormality diagnosis of the starter motor 30 when it is determined that the vehicle stop prediction condition has been satisfied, but may be any means as long as the means performs the abnormality diagnosis of cranking means when a stop of the vehicle is predicted. The "automatic stop/start means" is not limited to the means for automatically stopping the engine 22 when the automatic stop condition based on the abnormality diagnosis completion flag F1, the abnormality flag F2, the accelerator operation amount Acc, the brake pedal position BP, the vehicle speed V, etc. is satisfied, and for automatically starting the engine 22, involving the cranking by the starter motor 30, when the automatic start condition based on the accelerator operation amount Acc, the brake pedal position BP, etc. is satisfied, but may be any means as long as the means automatically stops the internal combustion engine when a predetermined automatic stop condition, including the condition that it is diagnosed that the cranking means does not have abnormality, is satisfied, and automatically starts the internal combustion engine from the automatically stopped state, involving the cranking by the cranking means, when a predetermined automatic start condition is satisfied. The "power transmission release means" is not limited to the automatic transmission or the manual transmission 128, but may be any means as long as the means transmits power from the internal combustion engine to the axle shaft side and releases the connection between the output shaft of the internal combustion engine and the axle shaft side.

While the best mode for carrying out the invention has been described with reference to the embodiment, it should be apparent that the invention is not limited at all to the foregoing and other embodiments, but can be carried out in various forms without departing from the gist of the invention.

This invention is applicable to the manufacture of vehicles, and the like.
The abnormality diagnosis of a starter motor is started at a time (t1) at which a stop of the vehicle is predicted. At a time (t3) at which an automatic stop condition, including a condition that the abnormality diagnosis is completed and that it is determined that the starter motor is normal, is satisfied, the engine is automatically stopped (see solid lines). Therefore, the engine can be automatically stopped at earlier timing than in a construction in which the abnormality diagnosis of the starter motor is started at a time (t2) at which the vehicle stops, and at a time (t4) at which the abnormality diagnosis is completed, the engine is automatically stopped (see dashed one-dotted lines). As a result, the fuel economy can be improved.

## Claims

1. A vehicle that travels by using power from an internal combustion engine, **characterized by** comprising:
cranking means (30) for cranking the internal combustion engine;
vehicle stop prediction means (40) for predicting a stop of the vehicle based on at least a state of travel of the vehicle;
abnormality diagnosis means (40) for performing abnormality diagnosis of the cranking means when a stop of the vehicle is predicted by the vehicle stop prediction means; and
automatic stop/start means (40) for automatically stopping the internal combustion engine if a predetermined automatic stop condition, including a condition that it is diagnosed that the cranking means does not have abnormality, is satisfied, and for automatically starting the internal combustion engine in an automatically stopped state with the cranking means performing cranking if a predetermined automatic start condition is satisfied.

2. The vehicle according to claim 1, wherein
the vehicle stop prediction means (40) predicts a stop of the vehicle if a predetermined vehicle stop prediction condition, including a vehicle speed condition that the vehicle speed is less than or equal to a first predetermined positive vehicle speed (Vref), an accelerator condition that an accelerator operation is not performed, and a brake condition that a brake operation is performed, is satisfied.

3. The vehicle according to claim 1, further comprising
power transmission release means (128) for performing transmission of power from the internal combustion engine to an axle shaft side and release of connection between an output shaft of the internal combustion engine and the axle shaft side, wherein
the vehicle stop prediction means (40) predicts a stop of the vehicle if a predetermined vehicle stop prediction condition, including a vehicle speed condition that the vehicle speed is less than or equal to a predetermined vehicle speed, and an accelerator condition that an accelerator operation is not performed, and a connection release condition that the connection between the output shaft of the internal combustion engine and the axle shaft side is released by the power transmission release means based on a driver's operation, is satisfied

4. The vehicle according to claim 3, wherein
the power transmission release means (128) is a manual transmission, and
the connection release condition is a condition that the connection between the output shaft of the internal combustion engine and the axle shaft side is released by the power transmission release means based on the driver's operation of a clutch pedal.

5. The vehicle according to claim 3 or 4, wherein
the connection release condition is a condition that the connection between the output shaft of the internal combustion engine and the axle shaft side is released by the power transmission release means based on a shift operation of shifting a shift position to a neutral position.

6. The vehicle according to any one of claims 2 to 4, wherein
the vehicle stop prediction condition is a condition that is satisfied regardless of the shift position.

7. The vehicle according to any one of claims 2 to 6, wherein
the predetermined vehicle stop prediction condition includes a condition that there is a history of the vehicle speed exceeding a second predetermined vehicle speed (Vref1) that is equal to or higher than the first predetermined positive vehicle speed (Vref) before the vehicle speed is less than or equal to the first predetermined positive vehicle speed (Vref).

8. A control method for a vehicle that includes an internal combustion engine (22) that outputs power for travel of the vehicle, and cranking means (30) for cranking the internal combustion engine, **characterized by** comprising the steps of:
performing abnormality diagnosis of the cranking means if a stop of the vehicle is predicted based on at least a state of travel of the vehicle; and
automatically stopping the internal combustion engine if a predetermined automatic stop condition, including a condition that it is diagnosed that the cranking means does not have abnormality, is satisfied, and automatically starting the internal combustion engine in an automatically stopped state, with cranking by the cranking means being involved, if a predetermined automatic start condition is satisfied.
